# EUROPÄISCHE PATENTSCHRIFT

(11) **EP 3 588 271 B1**
(45) Veröffentlichungstag und Bekanntmachung des Hinweises auf die Patenterteilung: **15.11.2023**
(21) Anmeldenummer: 19181319.5
(22) Anmeldetag: 19.06.2019
(51) Int. Cl.: G06F 8/34, G05B 19/042, G05B 19/04, G06F 21/00

(54) **VERFAHREN UND VORRICHTUNG ZUR KONFIGURATION EINER HARDWAREKOMPONENTE**
METHOD AND DEVICE FOR CONFIGURING A HARDWARE COMPONENT
PROCÉDÉ ET DISPOSITIF DE CONFIGURATION D'UN COMPOSANT MATÉRIEL

(30) Priorität: 27.06.2018 BE 201805447
(43) Veröffentlichungstag der Anmeldung: 01.01.2020
(73) Patentinhaber: Phoenix Contact GmbH & Co.KG, 32825 Blomberg (DE)
(72) Erfinder: Bossek, Björn, 31812 Bad Pyrmont (DE); Gregorius, Carsten, 31812 Bad Pyrmont (DE); Rahlves, Lutz, 31789 Hameln (DE)
(74) Vertreter: Blumbach · Zinngrebe Patentanwälte PartG mbB

(56) Entgegenhaltungen:
- US-A- 5 909 368
- US-A1- 2006 290 716
- KHORAL RESEARCH INC: "The Khoros Visual Programming Environment, Chapter 1 and Appendix A", INTERNET CITATION, 20. Dezember 1994 (1994-12-20), XP002293306, Gefunden im Internet: URL:ftp://ftp.tnt.uni-hannover.de/pub/soft /khoros2/manual/khoros_manual/ [gefunden am 2004-06-23]
- NATIONAL INSTRUMENTS: "LabVIEW User Manual - April 2003 Edition", INTERNET CITATION, April 2003 (2003-04), XP002453188, Gefunden im Internet: URL:http://www.ni.com/pdf/manuals/320999e. pdf [gefunden am 2007-09-26]

## Beschreibung

Die Erfindung betrifft ein Verfahren und eine Vorrichtung zur Konfiguration einer Hardwarekomponente, insbesondere eines konfigurierbaren sicheren Eingangs-/AusgangsModuls mit zumindest einem Moduleingang für Moduleingangssignale und/oder zumindest einem Modulausgang für Modulausgangssignale zum Anschluss zumindest eines Funktionsmoduls.

Mit zunehmender Verbreitung und Komplexität von automatisierten Prozessen steigt auch die Bedeutung der Vermeidung und Beherrschung von Fehlern mit Hilfe sicherheitstechnischer Einrichtungen und Funktionen, insbesondere solcher die im Hinblick auf Sicherheitsnormen zertifiziert sind. Sichere und zugleich konfigurierbare Eingangs-/Ausgangs-Module werden in der Automatisierungstechnik insbesondere dann herangezogen, wenn eine flexibel an die jeweiligen Anforderungen des Systems anpassbare Sicherheitslogik realisiert werden soll. Dabei ist es bekannt, die gewünschte Sicherheitslogik für ein konfigurierbares Sicherheitsmodul mit Hilfe eines auf einer Datenverarbeitungsanlage ausgeführten Konfigurationsprogramms einzurichten oder anzupassen. Auf diese Weise können Sicherheitssteuerungen individuell installiert bzw. konfiguriert werden, um funktionale Sicherheit zuverlässig in der Automatisierung zu integrieren.

Die europäische Patentanmeldung EP 2 098 926 A1 beschreibt ein Verfahren zum Programmieren und/oder Konfigurieren einer Sicherheitssteuerung mit einer Steuerung und mindestens einem Anschlussmodul, welches zumindest einen Eingang für einen Sensor und/oder zumindest einen Ausgang für einen Aktor aufweist, wobei über eine grafische Benutzeroberfläche an die Sicherheitssteuerung anzuschließende Funktionseinheiten, also Sensoren und/oder Aktoren, ausgewählt und Eingängen und/oder Ausgängen eines Anschlussmoduls zugeordnet werden. Dabei werden anzuschließende Funktionseinheiten mittels einer Zuordnungsfunktion automatisch geeigneten Eingängen und/oder Ausgängen zugeordnet.

Die europäische Patentschrift EP 2 260 357 B1 betrifft eine Vorrichtung zur Steuerung einer Anlage und ein Verfahren zur Einrichtung und Bedienung der Steuerung einer Anlage.

Insbesondere ist eine Steuereinheit vorgesehen, die zur Abarbeitung eines Steuerungsprogramms der Anlage eingerichtet ist, wobei das Steuerungsprogramm Funktionsmodule aufweist, mit denen Aktoren der Anlage ansteuerbar und Sensoren der Anlage auswertbar und Daten mit wenigstens einem weiteren Kommunikationsteilnehmer der Anlage austauschbar sind. Ferner ist eine Visualisierungseinheit vorgesehen, mit welcher das Steuerungsprogramm funktionell für einen Bediener darstellbar ist, wobei in der funktionellen Darstellung des Steuerungsprogramms jedes Funktionsmodul des Steuerungsprogramms durch ein Darstellungsmodul repräsentiert ist. Aktivierte Darstellungsmodule bilden jeweils einen Teil der funktionellen Darstellung des Steuerungsprogramms sind zur Laufzeit des Steuerungsprogramms zur Statusanzeige und Parametrierung des jeweiligen Funktionsmoduls verwendbar.

Die Patentanmeldung US5909368A offenbart eine Methode zur Implementierung einer vom Benutzer entwickelten Gesamtsteuerungsstrategie in einem Prozesssteuerungsnetzwerk, das verteilte Regler und Feldgeräte, wie Feldbus- und Nicht-Feldbusgeräte, umfasst. Der Benutzer definiert die Steuerungsstrategie, indem er Funktionsblöcke und Steuerungsmodule erstellt und benutzerdefinierte Teile der Steuerungsstrategie in die Geräte herunterlädt und installiert.

Eine Aufgabe der vorliegenden Erfindung ist es, den Konfigurationsprozess einer konfigurierbaren Hardwarekomponente, insbesondere eines sicheren Eingangs-/AusgangsModuls zu verbessern. Es sollen insbesondere weitere Möglichkeiten angegeben werden, um komplexere Konfigurationen mit mehreren Funktionsbausteinen vorzunehmen. Ein Aspekt der Aufgabe ist es, die Konfiguration der Sicherheitslogik einfacher und schneller zu gestalten, den Programmieraufwand zu reduzieren, die Zuverlässigkeit der Validation zu erhöhen und damit schließlich die Sicherheit von Automatisierungsprozessen zu verbessern.

Diese Aufgabe wird durch die Gegenstände der unabhängigen Ansprüche gelöst. Vorteilhafte Ausführungsformen sind Gegenstände der abhängigen Ansprüche.

Erfindungsgemäß wird ein Verfahren zur Konfiguration eines konfigurierbaren Hardwaremoduls bzw. einer konfigurierbaren Hardwarekomponente, insbesondere eines Sicherheitsmoduls bzw. einer Sicherheitskomponente bereit gestellt. Insbesondere betrifft das Verfahren die Konfiguration einer für die Feldebene bestimmten Automatisierungskomponente, welche vorzugsweise bestimmten Sicherheitsnormen genügt, z.B. ein bestimmtes Sicherheits-Integritäts-Level (SIL) aufweist, etwa mindestens Level 1, mindestens Level 2, mindestens Level 3 oder auch Level 4. Insbesondere kann es sich bei der konfigurierbaren Hardware um ein Eingangs-/Ausgangs-Modul mit zumindest einem Moduleingang für Moduleingangssignale und/oder zumindest einem Modulausgang für Modulausgangssignale zum Anschluss zumindest eines Funktionsmoduls handeln, wobei bevorzugt ein sicheres Eingangs-/Ausgangs-Modul mit sicheren Eingängen und sicheren Ausgängen zum Einsatz kommt. Als Funktionsmodule können z.B. Sensoren oder Aktoren eingesetzt werden.

Für die Konfiguration der Hardwarekomponente kommt eine Konfigurations-Software, d.h. ein Konfigurationsprogramm zum Einsatz, welches auf einer Datenverarbeitungsanlage ausführbar ist und dazu eingerichtet ist auf einer mit der Datenverarbeitungsanlage in Verbindung stehenden Anzeigeeinrichtung eine grafische Benutzeroberfläche darzustellen. Das Konfigurationsprogramm entspricht vorzugsweise gesetzlichen Vorgaben für das Einrichten von Sicherheitsanwendungen und/oder ist dazu eingerichtet, die Anforderungen der Norm ISO 13849-1, insbesondere gemäß der zum Anmeldetag gültigen Version, umzusetzen. Als Beispiel eines solchen Konfigurationsprogramms kann "SAFECONF" genannt werden.

Die grafische Benutzeroberfläche stellt dabei eine Mehrzahl von Funktionsbausteinen mit jeweils zumindest einem Eingang für Eingangssignale und einem Ausgang für Ausgangssignale bereit und ermöglicht es, die Funktionsbausteine jeweils mittels der grafischen Benutzeroberfläche auszuwählen, um sie für die Konfiguration der Hardwarekomponente heranzuziehen. Dazu sind die sicheren Bausteine/Funktionen z.B. in die grafische Programmieroberfläche der Konfigurationssoftware integriert, um in der Erstellung einer Sicherheitslogik eine spezifische Sicherheitsfunktion zu realisieren. Die mittels der grafischen Benutzeroberfläche bereitgestellten und/oder ausgewählten Funktionsbausteine haben jeweils z.B. eine Entsprechung in der Hardwarekomponente, auf der eine Steuerungslogik vorhanden ist, welche die entsprechenden Funktionsbausteine umfasst. Die bereitgestellten Funktionsbausteine können z.B. in einer Bibliothek zusammengefasst sein. Um einen Funktionsbaustein auf der zu konfigurierenden Hardwarekomponente zu aktivieren bzw. in die Steuerungslogik einzubeziehen, kann der entsprechende Funktionsbaustein z.B. mittels der grafischen Benutzeroberfläche ausgewählt werden, oder es kann ggf. auch vorgesehen sein, dass die Aktivierung nach dem Auswählen erfolgt. Insbesondere kann ein ausgewählter bzw. aktivierter Funktionsbaustein mittels der grafischen Benutzeroberfläche zur Parametrierung und/oder Verknüpfung mit anderen Funktionsbausteinen genutzt werden, so dass das Verhalten des oder der Funktionsbausteine in der Hardwarekomponente beeinflusst werden kann. Die Funktionsbausteine stellen jeweils eine bestimmte, eigenständige Funktion bereit, die auf die Eingangssignale einwirken, um die Ausgangssignale zu erzeugen, wobei die Funktionsbausteine jeweils eigenständig ausführbar bzw. aktivierbar sind.

Erfindungsgemäß wird bei dem Verfahren zur Konfiguration eines Hardwaremoduls ein erster und ein zweiter Funktionsbaustein miteinander verknüpft, so dass ein kombinierter Funktionsbaustein mit zumindest einem Eingang für Eingangssignale und einem Ausgang für Ausgangssignale gebildet wird, derart, dass zumindest einer der Eingänge oder Ausgänge des ersten Funktionsbausteins und zumindest einer der Eingänge oder Ausgänge des zweiten Funktionsbausteins zumindest zwei der Eingänge und Ausgänge des kombinierten Funktionsbausteins bilden. Die Formulierung "einer der Eingänge" oder "einer der Ausgänge" wird hierbei und im Folgenden als "einer des zumindest einen Eingangs" bzw. "einer des zumindest einen Ausgangs" verstanden, sofern zumindest ein Eingang bzw. zumindest ein Ausgang vorgesehen ist. Entsprechend wird die Formulierung "zwei der Eingänge und Ausgänge" als "zwei Ein/Ausgänge des zumindest einen Eingangs und Ausgangs" verstanden. Mit anderen Worten weist der kombinierte Funktionsbaustein sowohl von dem ersten als auch von dem zweiten Funktionsbaustein jeweils einen Eingang oder Ausgang auf. Insbesondere entsprechen für diese übereinstimmenden Eingänge/Ausgänge die Eingangs-/Ausgangssignale des kombinierten Funktionsbausteins denen des ersten/zweiten Funktionsbausteins. Der kombinierte Funktionsbaustein umfasst somit insbesondere beide Funktionen des ersten und zweiten Funktionsbausteins und kann insbesondere eigenständig in die Steuerungslogik der Hardwarekomponente einbezogen bzw. dort aktiviert werden, wobei die Umsetzung in der Hardwarekomponente z.B. durch Verknüpfen, Auswählen oder Aktivieren erfolgen kann. Der kombinierte Funktionsbaustein kann z.B. wiederum mittels der grafischen Benutzeroberfläche zur Parametrierung und/oder Verknüpfung mit anderen Funktionsbausteinen genutzt werden.

In einer Weiterbildung kann auch vorgesehen sein, dass zumindest drei oder eine Vielzahl von Funktionsbaustein miteinander verknüpft werden, wobei jeder dieser zu kombinierenden Funktionsbausteine jeweils zumindest einen Eingang oder einen Ausgang in den kombinierten Funktionsbaustein einbringt.

Vorzugsweise wird bei dem Verknüpfen des ersten und des zweiten Funktionsbausteins der kombinierte Funktionsbaustein derart gebildet, dass zumindest einer der Eingänge des ersten Funktionsbausteins und zumindest einer der Eingänge des zweiten Funktionsbausteins zumindest zwei Eingänge des kombinierten Funktionsbausteins bilden. Es kann auch vorgesehen sein, dass sämtliche Eingänge, insbesondere Dateneingänge, des ersten und sämtliche Eingänge, insbesondere Dateneingänge, des zweiten Funktionsbausteins in dem kombinierten Funktionsbaustein vorgesehen werden. Aktivierungseingänge können ggf. durch einen einzigen Aktivierungseingang zusammengefasst werden.

Ferner wird bei dem Verknüpfen des ersten und des zweiten Funktionsbausteins der kombinierte Funktionsbaustein bevorzugt derart gebildet dass die Ausgangssignale zumindest eines der Ausgänge des ersten Funktionsbausteins und die Ausgangssignale zumindest eines der Ausgänge des zweiten Funktionsbausteins die Ausgangssignale zumindest eines Ausgangs des kombinierten Funktionsbausteins beeinflussen. Es kann auch vorgesehen sein, dass die Ausgangsignale sämtlicher (Daten-)Ausgänge des ersten und sämtlicher (Daten-)Ausgänge des zweiten Funktionsbausteins die Ausgangssignale zumindest eines Ausgangs des kombinierten Funktionsbausteins beeinflussen.

Insbesondere kann eine logische Verknüpfung der Ausgangssignale zumindest eines der Ausgänge des ersten Funktionsbausteins mit den Ausgangssignalen zumindest eines der Ausgänge des zweiten Funktionsbausteins die Ausgangssignale zumindest eines Ausgangs des kombinierten Funktionsbausteins bilden. Diese logische Verknüpfung wird insbesondere mit der Verknüpfung, der Auswahl oder der Aktivierung des kombinierten Funktionsbausteins in der Hardwarekomponente realisiert. Die logische Verknüpfung kann dabei insbesondere ein Boolescher Operator sein, also insbesondere einen AND-Operator, einen OR-Operator, einen XOR-Operator, einen NOT-Operator, einen NAND-Operator, einen NOR-Operator oder einen XNOR-Operator.

Die logische Verknüpfung wird vorzugsweise aus einer Gruppe von logischen Verknüpfungen mittels der grafischen Benutzeroberfläche ausgewählt und/oder verändert, d.h. es ist ferner der Verfahrensschritt der Auswahl oder Veränderung der logischen Verknüpfung umfasst. Insbesondere wird ein Boolescher Operator ausgewählt und/oder verändert, also insbesondere einer der folgenden Operatoren: AND-Operator, OR-Operator, XOR-Operator, NOT-Operator, NAND-Operator, NOR-Operator oder XNOR-Operator.

Vorzugsweise werden der erste und/oder der zweiten Funktionsbausteins mittels der grafischen Benutzeroberfläche ausgewählt, um diese für die Konfiguration der Hardwarekomponente heranzuziehen, bevor der erste und zweite Funktionsbausteins miteinander verknüpft werden so dass der kombinierte Funktionsbaustein gebildet wird. In einer anderen Ausführungsform der Erfindung kann aber auch vorgesehen sein, dass der erste und/oder zweite Funktionsbaustein miteinander verknüpft werden so dass der kombinierte Funktionsbaustein gebildet wird, bevor der kombinierte Funktionsbaustein mittels der grafischen Benutzeroberfläche ausgewählt wird.

Das Auswählen des ersten und/oder zweiten Funktionsbausteins, oder auch des kombinierten Funktionsbausteins, mittels der grafischen Benutzeroberfläche erfolgt mittels Ziehen und Ablegen (Drag and Drop), insbesondere mittels einer mit der Datenverarbeitungsanlage und/oder Anzeigevorrichtung verbundenen Zeigeeinrichtung oder Gestenerkennungseinrichtung. Es kann auch vorgesehen sein, dass das Auswählen bereits durch das Ziehen (Drag) erfolgt.

Erfindungsgemäß wird der erste und/oder zweite Funktionsbaustein vor, während und/oder nach dem Auswählen als ein eigenständiger flächiger Bereich auf der grafischen Benutzeroberfläche dargestellt und der zumindest eine Eingang für Eingangssignale und/oder Ausgang für Ausgangssignale als grafisches Objekt in dem flächigen Bereich dargestellt, so dass die Hardwarekomponente mittels der grafischen Benutzeroberfläche derart konfigurierbar ist, dass die Eingangssignale und/oder Ausgangssignale mit den Moduleingangssignalen des Moduleingangs und/oder Modulausgangssignalen des Modulausgangs in einem Wirkzusammenhang stehen.

Erfindungsgemäß wird der erste Funktionsbaustein mittels der grafischen Benutzeroberfläche mittels Ziehen und Ablegen (Drag and Drop) ausgewählt, um diesen für die Konfiguration der Hardwarekomponente heranzuziehen, wobei der erste Funktionsbaustein zumindest nach dem Ablegen als ein erster flächiger Bereich auf der grafischen Benutzeroberfläche dargestellt wird. Danach wird der zweite Funktionsbaustein mittels der grafischen Benutzeroberfläche mittels Ziehen und Ablegen (Drag and Drop) ausgewählt, um diesen für die Konfiguration der Hardwarekomponente heranzuziehen, wobei der zweite Funktionsbaustein zumindest während dem Ziehen als ein zweiter flächiger Bereich auf der grafischen Benutzeroberfläche dargestellt wird. Dabei wird der zweite flächige Bereich des zweiten Funktionsbausteins in Überlappung mit dem ersten flächigen Bereich des ersten Funktionsbausteins gebracht, um die beiden Funktionsbausteine miteinander zu verknüpfen, so dass der kombinierte Funktionsbaustein gebildet wird, und insbesondere diese Verknüpfung auch in der Hardwarekomponente realisiert wird oder realisierbar ist. Die Verknüpfung kann z.B. bei Eintritt der Überlappung oder durch Ablegen (Drop) erfolgen.

In einer anderen Ausführungsform kann aber auch vorgesehen sein, dass der erste und der zweite Funktionsbaustein jeweils mittels der grafischen Benutzeroberfläche insbesondere mittels Ziehen und Ablegen (Drag and Drop) ausgewählt werden, wobei die entsprechenden Funktionen insbesondere bereits in der Hardwarekomponente realisiert werden oder realisierbar sind, und danach die Verknüpfung erfolgt, so dass der kombinierte Funktionsbaustein gebildet wird, und insbesondere diese Verknüpfung wiederum in der Hardwarekomponente realisiert wird oder realisierbar ist. Die Verknüpfung kann hierbei z.B. wiederum durch (nachträgliches) Herbeiführen einer Überlappung erfolgen oder auch durch Ausführen eines Verknüpfungsbefehls.

Es ist insbesondere vorgesehen, dass der kombinierte Funktionsbaustein vor während und/oder nach dem Auswählen als ein eigenständiger flächiger Bereich auf der grafischen Benutzeroberfläche dargestellt wird und vorzugsweise der zumindest eine Eingang für Eingangssignale, Ausgang für Ausgangssignale und/oder der Boolesche Operator zur logischen Verknüpfung als grafisches Objekt in dem flächigen Bereich dargestellt wird, so dass die Hardwarekomponente mittels der grafischen Benutzeroberfläche derart konfigurierbar ist, dass die Eingangssignale und/oder Ausgangssignale mit den Moduleingangssignalen des Moduleingangs und/oder Modulausgangssignalen des Modulausgangs in einem den Booleschen Operator umfassenden Wirkzusammenhang stehen.

In einer Weiterbildung umfasst das Verfahren das Herstellen einer Verbindung zwischen zumindest einem der Moduleingänge und/oder zumindest einem der Modulausgänge mit zumindest einem der Eingänge oder Ausgänge des kombinierten Funktionsbausteins mittels der grafischen Benutzeroberfläche, um die Hardwarekomponente derart zu konfigurieren, dass die jeweiligen Moduleingangssignale und/oder Modulausgangssignale als die jeweiligen Eingangssignale und/oder Ausgangssignale des kombinierten Funktionsbausteins behandelt werden.

Bezüglich aller Ausführungsformen repräsentiert der erste, zweite und/oder kombinierte Funktionsbaustein jeweils eine Funktion, insbesondere eine Sicherheitsfunktion, derart, dass die Ausgangssignale zumindest eines der Ausgänge des jeweiligen Funktionsbausteins einer Funktion der Eingangssignale zumindest eines der Eingänge des jeweiligen Funktionsbausteins entsprechen, um die jeweilige Funktion mittels der Hardwarekomponente zu realisieren, und wobei die Funktion vorzugsweise von einer Prüforganisation hinsichtlich einer Sicherheitsanforderung zertifiziert ist und vorzugsweise ein vorgegebenes Sicherheits-Integritäts-Level (SIL) erfüllt, etwa mindestens Level 1, mindestens Level 2, mindestens Level 3 oder auch Level 4.

Die Erfindung betrifft ferner eine Vorrichtung zur Konfiguration einer Hardwarekomponente, insbesondere eines konfigurierbaren Eingangs-/Ausgangs-Moduls mit zumindest einem Moduleingang für Moduleingangssignale und/oder zumindest einem Modulausgang für Modulausgangssignale zum Anschluss zumindest eines Funktionsmoduls.

Die Vorrichtung umfasst eine Datenverarbeitungsanlage und eine damit verbundene Anzeigeeinrichtung, welche dazu eingerichtet sind, ein Konfigurationsprogramm für die Konfiguration der Hardwarekomponente auszuführen und eine grafische Benutzeroberfläche des Konfigurationsprogramms darzustellen. Ferner kann die Vorrichtung die Hardware-Komponente umfassen. Die grafische Benutzeroberfläche stellt eine Mehrzahl von Funktionsbausteinen mit jeweils zumindest einem Eingang für Eingangssignale und einem Ausgang für Ausgangssignale bereit, wobei die Funktionsbausteine jeweils mittels der grafischen Benutzeroberfläche auswählbar sind, um sie für die Konfiguration der Hardwarekomponente heranzuziehen.

Die erfindungsgemäße Vorrichtung, die Datenverarbeitungsanlage und/oder die damit verbundene Anzeigeeinrichtung ist dazu eingerichtet, einen ersten und ein zweiten Funktionsbaustein miteinander zu verknüpfen, so dass ein kombinierter Funktionsbaustein mit zumindest einem Eingang für Eingangssignale und einem Ausgang für Ausgangssignale gebildet wird, derart, dass zumindest einer der Eingänge oder Ausgänge des ersten Funktionsbausteins und zumindest einer der Eingänge oder Ausgänge des zweiten Funktionsbausteins zumindest einen der Eingänge und einen der Ausgänge des kombinierten Funktionsbausteins bilden. Die weiteren Ausgestaltungsmöglichkeiten des Verfahrens gelten auch für die Vorrichtung.

Ferner betrifft die Erfindung ein Konfigurationsprogramm zur Konfiguration einer Hardwarekomponente, insbesondere eines konfigurierbaren Eingangs-/Ausgangs-Moduls mit zumindest einem Moduleingang für Moduleingangssignale und/oder zumindest einem Modulausgang für Modulausgangssignale zum Anschluss zumindest eines Funktionsmoduls. Das Konfigurationsprogramm ist auf einer Datenverarbeitungsanlage ausführbar und ist dazu eingerichtet auf einer mit der Datenverarbeitungsanlage verbundenen Anzeigeeinrichtung eine grafische Benutzeroberfläche darzustellen, wobei die grafische Benutzeroberfläche wiederum eine Mehrzahl von Funktionsbausteinen mit jeweils zumindest einem Eingang für Eingangssignale und einem Ausgang für Ausgangssignale bereitstellt und wobei die Funktionsbausteine jeweils mittels der grafischen Benutzeroberfläche auswählbar sind, um sie für die Konfiguration der Hardwarekomponente heranzuziehen.

Das erfindungsgemäße Konfigurationsprogramm umfasst Befehle, welche die Datenverarbeitungsanlage und/oder die damit verbundene Anzeigeeinrichtung dazu veranlassen oder veranlassen können, dass ein erster und ein zweiter Funktionsbaustein miteinander verknüpft werden, so dass ein kombinierter Funktionsbaustein mit zumindest einem Eingang für Eingangssignale und einem Ausgang für Ausgangssignale gebildet wird, derart, dass zumindest einer der Eingänge oder Ausgänge des ersten Funktionsbausteins und zumindest einer der Eingänge oder Ausgänge des zweiten Funktionsbausteins zumindest einen der Eingänge und einen der Ausgänge des kombinierten Funktionsbausteins bilden. Die weiteren Ausgestaltungsmöglichkeiten des Verfahrens gelten auch für das Konfigurationsprogramm.

Schließlich betrifft die Erfindung noch ein Speichermedium mit einem darauf gespeicherten Konfigurationsprogramm zur Konfiguration einer Hardwarekomponente, insbesondere eines konfigurierbaren Eingangs-/Ausgangs-Moduls mit zumindest einem Moduleingang für Moduleingangssignale und/oder zumindest einem Modulausgang für Modulausgangssignale zum Anschluss zumindest eines Funktionsmoduls.

Auf dem erfindungsgemäßen Speichermedium ist ein Konfigurationsprogramm gespeichert, welches auf einer Datenverarbeitungsanlage ausführbar ist und dazu eingerichtet ist auf einer mit der Datenverarbeitungsanlage verbundenen Anzeigeeinrichtung eine grafische Benutzeroberfläche darzustellen, wobei die grafische Benutzeroberfläche eine Mehrzahl von Funktionsbausteinen mit jeweils zumindest einem Eingang für Eingangssignale und einem Ausgang für Ausgangssignale bereitstellt und wobei die Funktionsbausteine jeweils mittels der grafischen Benutzeroberfläche auswählbar sind, um sie für die Konfiguration der Hardwarekomponente heranzuziehen.

Das auf dem erfindungsgemäßen Speichermedium gespeicherte Konfigurationsprogramm umfasst Befehle, welche die Datenverarbeitungsanlage und/oder die damit verbundene Anzeigeeinrichtung dazu veranlasst, einen ersten und einen zweiten Funktionsbaustein miteinander zu verknüpfen, so dass ein kombinierter Funktionsbaustein mit zumindest einem Eingang für Eingangssignale und einem Ausgang für Ausgangssignale gebildet wird, derart, dass zumindest einer der Eingänge oder Ausgänge des ersten Funktionsbausteins und zumindest einer der Eingänge oder Ausgänge des zweiten Funktionsbausteins zumindest einen der Eingänge und einen der Ausgänge des kombinierten Funktionsbausteins bilden. Die weiteren Ausgestaltungsmöglichkeiten des Verfahrens gelten auch für das Speichermedium.

Weitere Ausführungsbeispiele der Erfindung werden Bezug nehmend auf die beigefügten Zeichnungen näher erläutert. Es zeigen:
- Fig. 1:: Einen Teil einer grafischen Benutzeroberfläche mit zwei Funktionsbausteinen, deren Ausgänge über einen UND-Operator miteinander verschaltet sind.
- Fig. 2 a): Einen Teil einer grafischen Benutzeroberfläche mit einem ersten ausgewählten Funktionsbaustein.

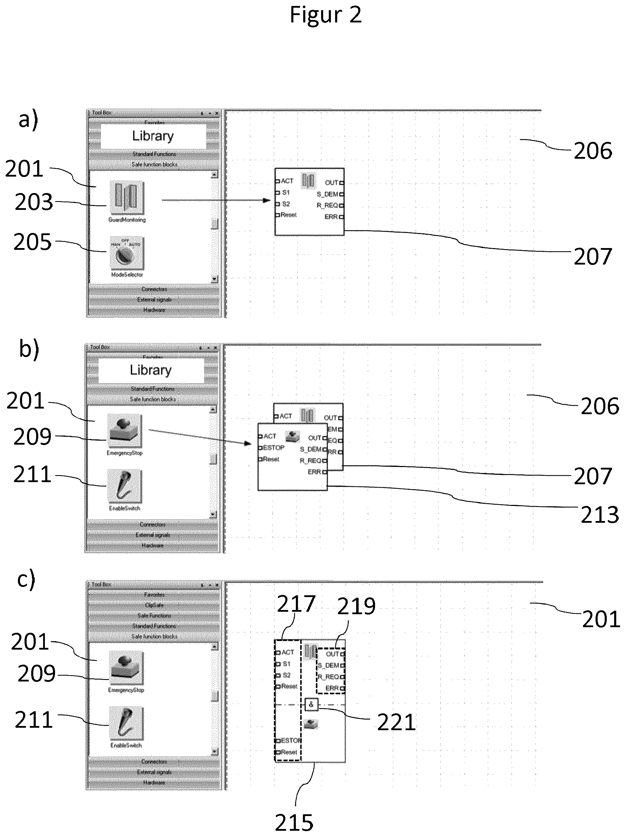

- Fig. 2 b): Einen Teil einer grafischen Benutzeroberfläche mit dem ersten ausgewählten Funktionsbaustein aus Fig. 2 a) und einem zweiten Funktionsbaustein, wobei die flächigen Darstellungsbereiche des zweiten und ersten Funktionsbausteins miteinander in Überlappung gebracht sind, um eine Verknüpfung herbeizuführen.
- Fig. 2 c): Einen Teil einer grafischen Benutzeroberfläche mit einem durch Kombination des ersten und zweiten Funktionsbausteins aus Fig. 2 b) entstandenen kombinierten Funktionsbaustein.

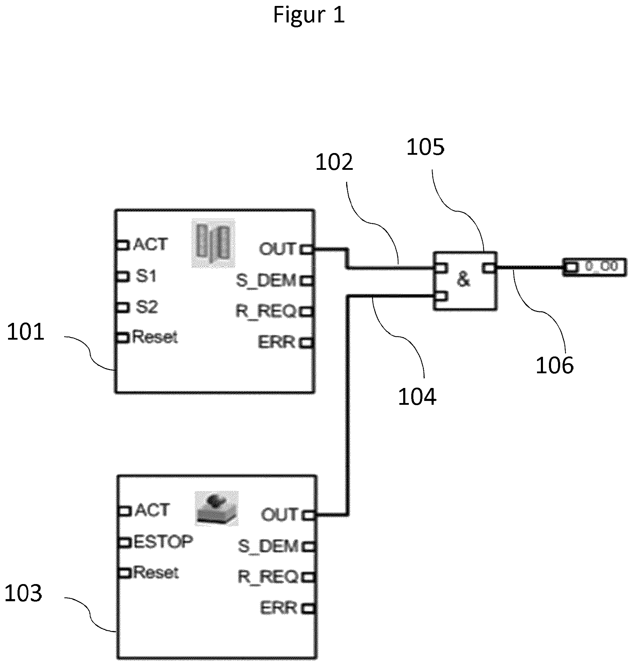

Fig. 1 zeigt einen sicheren Funktionsbaustein 101, welcher z.B. eine Überwachungsfunktion (Guard Monitoring) bereitstellt und einen sicheren Funktionsbaustein 103, welcher z.B. eine Not-Halt-Funktion (Emergency Stop) bereitstellt. Die sicheren Bausteine/Funktionen sind z.B. in die grafische Programmieroberfläche der Konfigurationssoftware integriert, um in der Erstellung einer Sicherheitslogik eine spezifische Sicherheitsfunktion zu realisieren. Die Funktionsbausteine sind jeweils eigenständig auswählbar/aktivierbar und realisieren eine eigenständige Funktion in der Hardwarekomponente, d.h. dem Hardwaremodul.

Sollen mehrere Sicherheitsfunktionen z.B. verschiedene Not-Halt-Taster verarbeitet werden, so ist es gemäß dem Stand der Technik bekannt, für jede einzelne Sicherheitsfunktion einen separaten Funktionsbaustein zu verwenden. Anschließend können dann die Ausgangsparameter logisch "UND"-verknüpft werden. In der Fig. 1 ist dies über den Booleschen UND-Operator 105 dargestellt, welcher die Ausgangssignale 102, 104 der Ausgänge OUT der beiden Funktionsbausteine 101 und 103 verknüpft und als Ausgangssignal 106 (0_O0) bereitstellt. Der Boolesche Operator stellt nur eine logische Verknüpfung bereit und ist daher nicht als Funktionsbaustein zu verstehen.

Bei einer Sicherheitslogik mit zwei oder mehreren eigenständigen Funktionsbausteinen, deren Ausgänge nach Auswahl mit Booleschen Operatoren verschaltet werden kann es bspw. bei Konfiguration bei Auswahl bzw. Verschaltung zu mehrfacher Konfiguration des Hardwaremoduls kommen. Ferner können aufgrund der logischen Verschaltung mitunter schwer lesbare (interpretierbare) Programmnetzwerke entstehen. Speziell im Safety-Bereich ist eine leichte Lesbarkeit allerdings Voraussetzung für die Validation von Sicherheitsfunktionen.

Fig. 2 a) zeigt einen als Bausteinbibliothek 201 ausgebildeten Bereich der grafischen Benutzeroberfläche in dem eine Mehrzahl von Funktionsbausteinen als grafische Repräsentation 203, 205 dargestellt sind. Aus der Mehrzahl der von dem Konfigurationsprogramm bzw. der grafischen Benutzeroberfläche bereitgestellten Funktionsbausteinen, die in der Bausteinbibliothek 201 eine grafische Repräsentation 203, 205 haben, kann mittels Ziehen und Ablegen (Drag and Drop) ein jeweiliger Funktionsbaustein 207 ausgewählt werden, um ihn für die Konfiguration der Hardwarekomponente heranzuziehen. Ein ausgewählter Funktionsbaustein 207 kann z.B. in einem Editierbereich 206 (Grafischer Editor) der grafischen Benutzeroberfläche angezeigt werden. Eine Konfiguration der Hardwarekomponente kann insbesondere mit dem Auswählen erfolgen, so dass der Funktionsbaustein 207 in der Hardwarekomponente aktiviert wird und/oder von dem Konfigurationsprogramm in die Hardwarekomponente übertragen wird, oder es kann vorgesehen sein, dass die Konfiguration der Hardwarekomponente und/oder die Aktivierung danach erfolgt.

Der Funktionsbaustein 207 wird in diesem Beispiel insbesondere während dem Ziehen (Drag) und nach dem Ablegen (Drop) als ein eigenständiger flächiger Bereich auf der grafischen Benutzeroberfläche dargestellt, wobei Eingänge S_1, S_2, etc. für Eingangssignale und Ausgänge OUT, etc. für Ausgangssignale als grafische Objekte in dem flächigen Bereich dargestellt sind.

Fig. 2 b) zeigt wiederum die Bausteinbibliothek 201 und den grafischen Editierbereich 206. Der ausgewählte Funktionsbaustein 207, der für die Konfiguration der Hardwarekomponente heranzuziehen ist, ist in dem Editierbereich 206 dargestellt, und ermöglichst so eine Verknüpfung der dargestellten Eingänge/Ausgänge mit Eingängen/Ausgängen anderer Funktionsbausteine oder mit Moduleingängen/Modulausgängen.

Mittels Ziehen und Auswählen (Drag and Drop) kann ein weiterer Funktionsbaustein 213 ausgewählt werden, indem eine grafische Repräsentation 209 des Funktionsbausteins in der Bausteinbibliothek 201 in den grafischen Editierbereich 206 gezogen und abgelegt wird. Während dem Ziehen (Drag) wird der weitere Funktionsbaustein 213 als eigenständiger flächiger Bereich auf der grafischen Benutzeroberfläche dargestellt, wobei Eingänge ESTOP etc. für Eingangssignale und Ausgänge OUT, etc. für Ausgangssignale als grafische Objekte in dem flächigen Bereich dargestellt sind. Der flächige Bereich des weiteren Funktionsbausteins 213 wird mit dem flächigen Bereich des bereits ausgewählten Funktionsbausteins 207 in Überlappung gebracht; danach erfolgt das Ablegen (Drop), um die beiden Funktionsbausteine miteinander zu verknüpfen und einen kombinierten Funktionsbaustein für die Konfiguration der Hardwarekomponente zu erzeugen.

Fig. 2 c) zeigt wiederum die Bausteinbibliothek 201 und den grafischen Editierbereich 206. Mittels der grafischen Benutzeroberfläche wurden die beiden Funktionsbausteine 207 und 213 miteinander verknüpft, so dass ein kombinierter Funktionsbaustein 215 gebildet wurde. Der kombinierte Funktionsbaustein 215 wird durch einen flächigen Bereich dargestellt, wobei ein Eingangsbereich 217 mit Eingängen S_1, S_2, etc. vorgesehen ist und ein Ausgangsbereich 219 mit dem Ausgang OUT, etc. Der Ausgangsbereich 219 umfasst einen Bereich mit Ausgängen für sichere Ausgangsparameter und einen weiteren Bereich für Ausgänge mit Diagnosemeldungen.

Der kombinierte Funktionsbaustein 215, welcher zur Konfiguration der Hardwarekomponente dient, umfasst die Eingänge S_1, S_2, etc. des Funktionsbausteins 207 und die Eingänge ESTOP etc. des weiteren Funktionsbausteins 213. Ferner umfasst der kombinierte Funktionsbaustein einen kombinierten Ausgang OUT, dessen Ausgangssignale durch die Ausgangssignale der beiden Ausgänge OUT der beiden Funktionsbausteine 207 und 213 beeinflusst werden, z.B. indem ein logischer Operator 221 zum Einsatz kommt. In diesem Fall wird das Ausgangssignal des kombinierten Bausteins durch logische UND-Verknüpfung der beiden Ausgangssignale der Funktionsbausteine 207 und 213 gebildet. Es kann z.B. vorgesehen sein, dass der kombinierte Funktionsbaustein bei Verknüpfung eine UND-Verknüpfung bereitstellt, um mit dieser UND-Verknüpfung für die Konfiguration der Hardwarekomponente herangezogen zu werden.

Mit anderen Worten werden mittels des Konfigurationsprogramms beispielsweise folgende Verfahrensschritte ausgeführt. Erstens: Beliebigen Baustein/Funktion aus der Bausteinbibliothek heraus in die Programmieroberfläche (Grafischer Editor) ziehen und ablegen. Zweitens: Für eine weitere Sicherheitsfunktion wird nochmals aus der Bausteinbibliothek ein benötigter Baustein/Funktion auf den zuerst platzierten Baustein in den Grafischen Editor gezogen und abgelegt. Damit wird als Ergebnis bewirkt, dass der erste Baustein/Funktion mit dem zweiten Baustein/Funktion automatisch zusammengeführt (angedockt) wird. Des Weiteren findet eine automatische Anpassung der übrigen Eingangs und Ausgangsparameter statt. Die zusammengeführten Bausteine/Funktionen steuern nun gemeinsam in Abhängigkeit der ausgewählten logischen Funktion (UND, ODER, NOT etc.) einen gemeinsamen sicheren Ausgangsparameter (siehe Beispiel). Dies kann insbesondere unmittelbar in der Hardwarekomponente, z.B. einem Sicherheitsmodul umgesetzt werden, so dass bspw. bei Konfiguration bei Auswahl bzw. Verschaltung die mehrfache Konfiguration des Hardwaremoduls reduziert wird.

Weitere Vorteile sind, dass die Speicherauslastung der Hardware reduziert werden kann. Bspw. kann die Auslastung der Hardwarekomponente und/oder der Datenverarbeitungsanlage reduziert werden. Im Übrigen ergibt sich auch eine vereinfachte Darstellung von miteinander logisch verknüpften Funktionsbausteinen und damit wird auch eine einfache Erweiterung von zusätzlichen Sicherheitsfunktionen ermöglicht. Durch das Kombinieren sicherer Bausteine/Funktionen wird außerdem eine einfachere und transparentere Darstellung des Sicherheitsprogramms erzielt und ist dadurch leichter nachvollziehbar, kontrollierbar und validierbar, was für Sicherheitssysteme von besonderer Bedeutung ist. Ein zusätzlicher Vorteil ist, dass weniger Funktionen und Verbindungslinien in der Programmieroberfläche benötigt werden. Schließlich kann eine Zeit- und Kostenersparnis durch weniger Programmieraufwand erreicht werden.

Die Fig. 2 a) bis c) zeigen demnach zusammenfassend dass sichere Bausteine/Funktionen aus einer Bausteinbibliothek heraus z.B. per Drag and Drop in einer grafischen Programmieroberfläche beliebig kombiniert und erweitert werden können. Die kombinierten sicheren Bausteine/Funktionen wirken z.B. auf nur einen sicheren Ausgangsparameter (Verknüpfungsergebnis). Sichere und nicht sichere Ein-/ und Ausgangsparameter z.B. für die Diagnose sowie Baustein/Funktions-Parameter können optimiert dargestellt und/oder zusammengefasst werden. Zwischen den kombinierten Bausteinen/Funktionen besteht z.B. die Möglichkeit, über ein Auswahlfeld (Parameterfenster) mit logischen Funktionen (AND, ODER, NOT etc.) den sicheren Ausgangsparameter in Abhängigkeit der Baustein/Funktions-Auswertung zu steuern. Sichere Funktionsbausteine können somit in einer grafischen Benutzeroberfläche insbesondere beliebig oft kombiniert bzw. erweitert werden und wirken insbesondere auf nur einen sicheren Ausgangsparameter bzw. auf ein sicheres Ausgangssignal.

## Patentansprüche

1. Verfahren zur Konfiguration einer Hardwarekomponente mit Steuerungslogik, insbesondere eines konfigurierbaren sicheren Eingangs-/Ausgangs-Moduls mit zumindest einem Moduleingang für Moduleingangssignale und/oder zumindest einem Modulausgang für Modulausgangssignale zum Anschluss zumindest eines Sensors oder eines Aktors an die Hardwarekomponente,
- wobei für die Konfiguration der Hardwarekomponente ein Konfigurationsprogramm zum Einsatz kommt, welches auf einer Datenverarbeitungsanlage ausführbar ist und dazu eingerichtet ist auf einer mit der Datenverarbeitungsanlage verbundenen Anzeigeeinrichtung eine grafische Benutzeroberfläche darzustellen,
- wobei die grafische Benutzeroberfläche eine Mehrzahl von Funktionsbausteinen mit jeweils zumindest einem Eingang für Eingangssignale und einem Ausgang für Ausgangssignale bereitstellt und wobei die Funktionsbausteine jeweils mittels der grafischen Benutzeroberfläche auswählbar sind, um sie durch Einbeziehen in die Steuerungslogik der Hardwarekomponente bzw. dortige Aktivierung für die Konfiguration der Hardwarekomponente heranzuziehen, und wobei der erste und/oder zweite Funktionsbaustein vor, während und/oder nach dem Auswählen als ein eigenständiger flächiger Bereich auf der grafischen Benutzeroberfläche dargestellt wird und wobei der zumindest eine Eingang für Eingangssignale und der zumindest eine Ausgang für Ausgangssignale als grafisches Objekt in dem flächigen Bereich dargestellt wird, so dass die Hardwarekomponente mittels der grafischen Benutzeroberfläche derart konfigurierbar ist, dass die Eingangssignale und/oder Ausgangssignale mit den Moduleingangssignalen des Moduleingangs und/oder Modulausgangssignalen des Modulausgangs in einem Wirkzusammenhang stehen, und
- wobei ein erster und ein zweiter Funktionsbaustein miteinander verknüpft werden, so dass ein kombinierter Funktionsbaustein mit zumindest einem Eingang für Eingangssignale und einem Ausgang für Ausgangssignale gebildet wird, derart, dass zumindest einer der Eingänge oder Ausgänge des ersten Funktionsbausteins und zumindest einer der Eingänge oder Ausgänge des zweiten Funktionsbausteins zumindest zwei der Ein-/Ausgänge des kombinierten Funktionsbausteins bilden, **dadurch gekennzeichnet, dass**
- der erste Funktionsbaustein mittels der grafischen Benutzeroberfläche mittels Ziehen und Ablegen ausgewählt wird, um diesen für die Konfiguration der Hardwarekomponente heranzuziehen, wobei der erste Funktionsbaustein zumindest nach dem Ablegen als ein erster flächiger Bereich auf der grafischen Benutzeroberfläche dargestellt wird und
- wobei danach der zweite Funktionsbaustein mittels der grafischen Benutzeroberfläche mittels Ziehen und Ablegen ausgewählt wird, um diesen für die Konfiguration der Hardwarekomponente heranzuziehen, wobei der zweite Funktionsbaustein zumindest während dem Ziehen als ein zweiter flächiger Bereich auf der grafischen Benutzeroberfläche dargestellt wird und
- wobei der zweite flächige Bereich des zweiten Funktionsbausteins in Überlappung mit dem ersten flächigen Bereich des ersten Funktionsbausteins gebracht wird, um die beiden Funktionsbausteine miteinander zu verknüpfen, so dass der kombinierte Funktionsbaustein gebildet wird.

2. Verfahren nach Anspruch 1, wobei bei dem Verknüpfen des ersten und des zweiten Funktionsbausteins der kombinierte Funktionsbaustein derart gebildet wird, dass zumindest einer der Eingänge des ersten Funktionsbausteins und zumindest einer der Eingänge des zweiten Funktionsbausteins zumindest zwei Eingänge des kombinierten Funktionsbausteins bilden.

3. Verfahren nach Anspruch 1 oder 2, wobei bei dem Verknüpfen des ersten und des zweiten Funktionsbausteins der kombinierte Funktionsbaustein derart gebildet wird, dass die Ausgangssignale zumindest eines der Ausgänge des ersten Funktionsbausteins und die Ausgangssignale zumindest eines der Ausgänge des zweiten Funktionsbausteins die Ausgangssignale zumindest eines Ausgangs des kombinierten Funktionsbausteins beeinflussen.

4. Verfahren nach Anspruch 3, wobei eine logische Verknüpfung der Ausgangssignale zumindest eines der Ausgänge des ersten Funktionsbausteins mit den Ausgangssignalen zumindest eines der Ausgänge des zweiten Funktionsbausteins die Ausgangssignale zumindest eines Ausgangs des kombinierten Funktionsbausteins bildet, wobei die logische Verknüpfung vorzugsweise ein Boolescher Operator ist, insbesondere einen AND-Operator, einen OR-Operator, einen XOR-Operator, einen NOT-Operator, einen NAND-Operator, einen NOR-Operator oder einen XNOR-Operator.

5. Verfahren nach Anspruch 4, wobei die logische Verknüpfung aus einer Gruppe von logischen Verknüpfungen mittels der grafischen Benutzeroberfläche ausgewählt und/oder verändert wird, insbesondere ein Boolescher Operator ausgewählt wird aus der Gruppe umfassend einen AND-Operator, einen OR-Operator, einen XOR-Operator, einen NOT-Operator, einen NAND-Operator, einen NOR-Operator oder einen XNOR-Operator.

6. Verfahren nach einem der Ansprüche 1 bis 5, wobei der erste und/oder der zweite Funktionsbaustein mittels der grafischen Benutzeroberfläche ausgewählt werden, um diese für die Konfiguration der Hardwarekomponente heranzuziehen, bevor der erste und zweite Funktionsbaustein miteinander verknüpft werden so dass der kombinierte Funktionsbaustein gebildet wird.

7. Verfahren nach Anspruch 6, wobei das Auswählen des ersten und/oder zweiten Funktionsbausteins mittels der grafischen Benutzeroberfläche mittels Ziehen und Ablegen erfolgt, insbesondere mittels einer mit der Datenverarbeitungsanlage und/oder Anzeigevorrichtung verbundenen Zeigeeinrichtung oder Gestenerkennungseinrichtung erfolgt.

8. Verfahren nach einem der Ansprüche 1 bis 7, wobei der kombinierte Funktionsbaustein als ein eigenständiger flächiger Bereich auf der grafischen Benutzeroberfläche dargestellt wird und vorzugsweise der zumindest eine Eingang für Eingangssignale, Ausgang für Ausgangssignale und/oder der Boolesche Operator zur logischen Verknüpfung als grafisches Objekt in dem flächigen Bereich dargestellt wird, so dass die Hardwarekomponente mittels der grafischen Benutzeroberfläche derart konfigurierbar ist, dass die Eingangssignale und/oder Ausgangssignale mit den Moduleingangssignalen des Moduleingangs und/oder Modulausgangssignalen des Modulausgangs in einem den Booleschen Operator umfassenden Wirkzusammenhang stehen.

9. Verfahren nach einem der Ansprüche 1 bis 8, wobei der erste, zweite und/oder kombinierte Funktionsbaustein jeweils eine Funktion repräsentieren, derart, dass die Ausgangssignale zumindest eines der Ausgänge des jeweiligen Funktionsbausteins einer Funktion der Eingangssignale zumindest eines der Eingänge des jeweiligen Funktionsbausteins entsprechen, um die jeweilige Funktion mittels der Hardwarekomponente zu realisieren.

10. Vorrichtung zur Konfiguration einer Hardwarekomponente mit Steuerungslogik, insbesondere eines konfigurierbaren Eingangs-/Ausgangs-Moduls mit zumindest einem Moduleingang für Moduleingangssignale und/oder zumindest einem Modulausgang für Modulausgangssignale zum Anschluss zumindest eines Sensors oder eines Aktors an die Hardwarekomponente, umfassend
- eine Datenverarbeitungsanlage und eine damit verbundene Anzeigeeinrichtung, welche dazu eingerichtet sind, ein Konfigurationsprogramm für die Konfiguration der Hardwarekomponente auszuführen und eine grafische Benutzeroberfläche des Konfigurationsprogramms darzustellen,
- wobei die grafische Benutzeroberfläche eine Mehrzahl von Funktionsbausteinen mit jeweils zumindest einem Eingang für Eingangssignale und einem Ausgang für Ausgangssignale bereitstellt und wobei die Funktionsbausteine jeweils mittels der grafischen Benutzeroberfläche auswählbar sind, um sie durch Einbeziehen in die Steuerungslogik der Hardwarekomponente bzw. dortige Aktivierung für die Konfiguration der Hardwarekomponente heranzuziehen, und wobei der erste und/oder zweite Funktionsbaustein vor, während und/oder nach dem Auswählen als ein eigenständiger flächiger Bereich auf der grafischen Benutzeroberfläche dargestellt wird und wobei der zumindest eine Eingang für Eingangssignale und der zumindest eine Ausgang für Ausgangssignale als grafisches Objekt in dem flächigen Bereich dargestellt wird, so dass die Hardwarekomponente mittels der grafischen Benutzeroberfläche derart konfigurierbar ist, dass die Eingangssignale und/oder Ausgangssignale mit den Moduleingangssignalen des Moduleingangs und/oder Modulausgangssignalen des Modulausgangs in einem Wirkzusammenhang stehen, und
- wobei die Datenverarbeitungsanlage und/oder die damit verbundene Anzeigeeinrichtung dazu eingerichtet sind, einen ersten und ein zweiten Funktionsbausteins miteinander zu verknüpfen, so dass ein kombinierter Funktionsbaustein mit zumindest einem Eingang für Eingangssignale und einem Ausgang für Ausgangssignale gebildet wird, derart, dass zumindest einer der Eingänge oder Ausgänge des ersten Funktionsbausteins und zumindest einer der Eingänge oder Ausgänge des zweiten Funktionsbausteins zumindest zwei der Ein-/Ausgänge des kombinierten Funktionsbausteins bilden, **dadurch gekennzeichnet, dass**
- der erste Funktionsbaustein mittels der grafischen Benutzeroberfläche mittels Ziehen und Ablegen auswählbar ist, um diesen für die Konfiguration der Hardwarekomponente heranzuziehen, wobei der erste Funktionsbaustein zumindest nach dem Ablegen als ein erster flächiger Bereich auf der grafischen Benutzeroberfläche dargestellt wird und
- wobei danach der zweite Funktionsbaustein mittels der grafischen Benutzeroberfläche mittels Ziehen und Ablegen auswählbar ist, um diesen für die Konfiguration der Hardwarekomponente heranzuziehen, wobei der zweite Funktionsbaustein zumindest während dem Ziehen als ein zweiter flächiger Bereich auf der grafischen Benutzeroberfläche dargestellt wird und
- wobei der zweite flächige Bereich des zweiten Funktionsbausteins in Überlappung mit dem ersten flächigen Bereich des ersten Funktionsbausteins bringbar ist, um die beiden Funktionsbausteine miteinander zu verknüpfen, so dass der kombinierte Funktionsbaustein gebildet wird.

11. Konfigurationsprogramm zur Konfiguration einer Hardwarekomponente mit Steuerungslogik, insbesondere eines konfigurierbaren sicheren Eingangs-/Ausgangs-Moduls mit zumindest einem Moduleingang für Moduleingangssignale und/oder zumindest einem Modulausgang für Modulausgangssignale zum Anschluss zumindest eines Sensors oder eines Aktors an die Hardwarekomponente,
- wobei das Konfigurationsprogramm auf einer Datenverarbeitungsanlage ausführbar ist und dazu eingerichtet ist auf einer mit der Datenverarbeitungsanlage verbundenen Anzeigeeinrichtung eine grafische Benutzeroberfläche darzustellen,
- wobei die grafische Benutzeroberfläche eine Mehrzahl von Funktionsbausteinen mit jeweils zumindest einem Eingang für Eingangssignale und einem Ausgang für Ausgangssignale bereitstellt und wobei die Funktionsbausteine jeweils mittels der grafischen Benutzeroberfläche auswählbar sind, um sie durch Einbeziehen in die Steuerungslogik der Hardwarekomponente bzw. dortige Aktivierung für die Konfiguration der Hardwarekomponente heranzuziehen, und wobei der erste und/oder zweite Funktionsbaustein vor, während und/oder nach dem Auswählen als ein eigenständiger flächiger Bereich auf der grafischen Benutzeroberfläche dargestellt wird und wobei der zumindest eine Eingang für Eingangssignale und der zumindest eine Ausgang für Ausgangssignale als grafisches Objekt in dem flächigen Bereich dargestellt wird, so dass die Hardwarekomponente mittels der grafischen Benutzeroberfläche derart konfigurierbar ist, dass die Eingangssignale und/oder Ausgangssignale mit den Moduleingangssignalen des Moduleingangs und/oder Modulausgangssignalen des Modulausgangs in einem Wirkzusammenhang stehen, und
- wobei das Konfigurationsprogramm Befehle umfasst, welche die Datenverarbeitungsanlage und/oder die damit verbundene Anzeigeeinrichtung dazu veranlassen, dass ein erster und ein zweiter Funktionsbaustein miteinander verknüpft werden, so dass ein kombinierter Funktionsbaustein mit zumindest einem Eingang für Eingangssignale und einem Ausgang für Ausgangssignale gebildet wird, derart, dass zumindest einer der Eingänge oder Ausgänge des ersten Funktionsbausteins und zumindest einer der Eingänge oder Ausgänge des zweiten Funktionsbausteins zumindest zwei der Ein-/Ausgänge des kombinierten Funktionsbausteins bilden, **dadurch gekennzeichnet, dass**
- der erste Funktionsbaustein mittels der grafischen Benutzeroberfläche mittels Ziehen und Ablegen auswählbar ist, um diesen für die Konfiguration der Hardwarekomponente heranzuziehen, wobei der erste Funktionsbaustein zumindest nach dem Ablegen als ein erster flächiger Bereich auf der grafischen Benutzeroberfläche dargestellt wird und
- wobei danach der zweite Funktionsbaustein mittels der grafischen Benutzeroberfläche mittels Ziehen und Ablegen auswählbar ist, um diesen für die Konfiguration der Hardwarekomponente heranzuziehen, wobei der zweite Funktionsbaustein zumindest während dem Ziehen als ein zweiter flächiger Bereich auf der grafischen Benutzeroberfläche dargestellt wird und
- wobei der zweite flächige Bereich des zweiten Funktionsbausteins in Überlappung mit dem ersten flächigen Bereich des ersten Funktionsbausteins bringbar ist, um die beiden Funktionsbausteine miteinander zu verknüpfen, so dass der kombinierte Funktionsbaustein gebildet wird.

12. Speichermedium mit einem darauf gespeicherten Konfigurationsprogramm zur Konfiguration einer Hardwarekomponente mit Steuerungslogik, insbesondere eines konfigurierbaren sicheren Eingangs-/Ausgangs-Moduls mit zumindest einem Moduleingang für Moduleingangssignale und/oder zumindest einem Modulausgang für Modulausgangssignale zum Anschluss zumindest eines Sensors oder eines Aktors an die Hardwarekomponente,
- wobei das auf dem Speichermedium gespeicherte Konfigurationsprogramm auf einer Datenverarbeitungsanlage ausführbar ist und dazu eingerichtet ist auf einer mit der Datenverarbeitungsanlage verbundenen Anzeigeeinrichtung eine grafische Benutzeroberfläche darzustellen,
- wobei die grafische Benutzeroberfläche eine Mehrzahl von Funktionsbausteinen mit jeweils zumindest einem Eingang für Eingangssignale und einem Ausgang für Ausgangssignale bereitstellt und wobei die Funktionsbausteine jeweils mittels der grafischen Benutzeroberfläche auswählbar sind, um sie durch Einbeziehen in die Steuerungslogik der Hardwarekomponente bzw. dortige Aktivierung für die Konfiguration der Hardwarekomponente heranzuziehen, und wobei der erste und/oder zweite Funktionsbaustein vor, während und/oder nach dem Auswählen als ein eigenständiger flächiger Bereich auf der grafischen Benutzeroberfläche dargestellt wird und wobei der zumindest eine Eingang für Eingangssignale und der zumindest eine Ausgang für Ausgangssignale als grafisches Objekt in dem flächigen Bereich dargestellt wird, so dass die Hardwarekomponente mittels der grafischen Benutzeroberfläche derart konfigurierbar ist, dass die Eingangssignale und/oder Ausgangssignale mit den Moduleingangssignalen des Moduleingangs und/oder Modulausgangssignalen des Modulausgangs in einem Wirkzusammenhang stehen, und
- wobei das auf dem Speichermedium gespeicherte Konfigurationsprogramm Befehle umfasst, welche die Datenverarbeitungsanlage und/oder die damit verbundene Anzeigeeinrichtung dazu veranlasst, einen ersten und einen zweiten Funktionsbaustein miteinander zu verknüpfen, so dass ein kombinierter Funktionsbaustein mit zumindest einem Eingang für Eingangssignale und einem Ausgang für Ausgangssignale gebildet wird, derart, dass zumindest einer der Eingänge oder Ausgänge des ersten Funktionsbausteins und zumindest einer der Eingänge oder Ausgänge des zweiten Funktionsbausteins zumindest zwei der Ein-/Ausgänge des kombinierten Funktionsbausteins bilden, **dadurch gekennzeichnet, dass**
- der erste Funktionsbaustein mittels der grafischen Benutzeroberfläche mittels Ziehen und Ablegen auswählbar ist, um diesen für die Konfiguration der Hardwarekomponente heranzuziehen, wobei der erste Funktionsbaustein zumindest nach dem Ablegen als ein erster flächiger Bereich auf der grafischen Benutzeroberfläche dargestellt wird und
- wobei danach der zweite Funktionsbaustein mittels der grafischen Benutzeroberfläche mittels Ziehen und Ablegen auswählbar ist, um diesen für die Konfiguration der Hardwarekomponente heranzuziehen, wobei der zweite Funktionsbaustein zumindest während dem Ziehen als ein zweiter flächiger Bereich auf der grafischen Benutzeroberfläche dargestellt wird und
- wobei der zweite flächige Bereich des zweiten Funktionsbausteins in Überlappung mit dem ersten flächigen Bereich des ersten Funktionsbausteins bringbar ist, um die beiden Funktionsbausteine miteinander zu verknüpfen, so dass der kombinierte Funktionsbaustein gebildet wird.

## Claims

1. Method for configuring a hardware component with control logic, in particular a configurable safe input/output module having at least one module input for module input signals and/or at least one module output for module output signals for connecting at least one sensor or one actuator to the hardware component,
- wherein a configuration program is used for the configuration of the hardware component, which program can be executed on a data processing system and is set up to display a graphical user interface on a display device connected to the data processing system,
- - the graphical user interface providing a plurality of function modules each having at least one input for input signals and one output for output signals, and it being possible to select the function modules in each case by means of the graphical user interface in order to use them for the configuration of the hardware component by including them in the control logic of the hardware component and/or activating them there for the configuration of the hardware component, and wherein the first and/or second function module being represented as an independent two-dimensional area on the graphical user interface before, during and/or after the selection, and the at least one input for input signals and the at least one output for output signals being represented as a graphical object in the two-dimensional area in such a way so that the hardware component can be configured by means of the graphical user interface such that the input signals and/or output signals are in an operative relationship with the module input signals of the module input and/or module output signals of the module output , and
- wherein a first and a second function module are linked to each other so that a combined function module with at least one input for input signals and one output for output signals is formed, such that at least one of the inputs or outputs of the first function module and at least one of the inputs or outputs of the second function module form at least two of the inputs/outputs of the combined function module, **characterized in that**
- the first function module is selected by means of the graphical user interface by dragging and dropping in order to use it for the configuration of the hardware component, wherein the first function module being displayed as a first two-dimensional area on the graphical user interface, at least after it has been dropped, and
- the second function module then being selectable by means of the graphical user interface by dragging and dropping, in order to use it for the configuration of the hardware component, wherein the second function module is represented as a second two-dimensional area on the graphical user interface at least during the dragging, and
- wherein the second two-dimensional area of the second function module can be brought into overlap with the first two-dimensional area of the first function module in order to link the two function modules to one another, so that the combined function module is formed.

2. Method according to claim 1, wherein when the first and second function modules are linked, the combined function module is formed such that at least one of the inputs of the first function module and at least one of the inputs of the second function module form at least two inputs of the combined function module.

3. Method according to claim 1 or 2, wherein in linking the first and second function modules, the combined function module is formed such that the output signals of at least one of the outputs of the first function module and the output signals of at least one of the outputs of the second function module influence the output signals of at least one output of the combined function module.

4. Method according to claim 3, wherein a logical linking of the output signals of at least one of the outputs of the first function module with the output signals of at least one of the outputs of the second function module forms the output signals of at least one output of the combined function module, wherein the logical combination is preferably a Boolean operator, in particular an AND operator, an OR operator, an XOR operator, a NOT operator, a NAND operator, a NOR operator or an XNOR operator.

5. Method according to claim 4, wherein the logical linking is selected and/or modified from a group of logical linkings by means of the graphical user interface, in particular a Boolean operator is selected from the group comprising an AND operator, an OR operator, an XOR operator, a NOT operator, a NAND operator, a NOR operator or an XNOR operator,

6. Method according to any one of claims 1 to 5, wherein the first and/or second function module is selected by means of the graphical user interface to be used for configuring the hardware component before the first and second function module is linked together to form the combined function module,

7. Method according to claim 6, wherein the selection of the first and/or second function module is performed by means of the graphical user interface by dragging and dropping, in particular is performed by means of a pointing device or gesture recognition device connected to the data processing system and/or display device.

8. Method according to any one of claims 1 to 7, wherein the combined function module is represented as an independent two-dimensional area on the graphical user interface and preferably the at least one input for input signals, output for output signals and/or the Boolean operator for logical linking is represented as a graphical object in the two-dimensional area, so that the hardware component can be configured by means of the graphical user interface in such a way that the input signals and/or output signals are in an operative relationship with the module input signals of the module input and/or module output signals of the module output, including the Boolean operator.

9. Method according to any one of claims 1 to 8, wherein the first, second and/or combined function module each represent a function such that the output signals of at least one of the outputs of the respective function module correspond to a function of the input signals of at least one of the inputs of the respective function module to realize the respective function by means of the hardware component,

10. Device for configuring a hardware component with control logic, in particular a configurable input/output module having at least one module input for module input signals and/or at least one module output for module output signals for connecting at least one sensor or one actuator to the hardware component, comprising
- a data processing system and a display device connected thereto, which are set up to execute a configuration program for the configuration of the hardware component and to display a graphical user interface of the configuration program,
- the graphical user interface providing a plurality of function modules each having at least one input for input signals and one output for output signals, and it being possible to select the function modules in each case by means of the graphical user interface in order to use them for the configuration of the hardware component by including them in the control logic of the hardware component and/or activating them there for the configuration of the hardware component, and wherein the first and/or second function module being represented as an independent two-dimensional area on the graphical user interface before, during and/or after the selection, and the at least one input for input signals and the at least one output for output signals being represented as a graphical object in the two-dimensional area in such a way so that the hardware component can be configured by means of the graphical user interface such that the input signals and/or output signals are in an operative relationship with the module input signals of the module input and/or module output signals of the module output, and
- wherein the data processing system and/or the display device connected thereto are set up to link a first and a second function module to one another so that a combined function module with at least one input for input signals and one output for output signals is formed in such a manner in that at least one of the inputs or outputs of the first function module and at least one of the inputs or outputs of the second function module form at least two of the inputs/outputs of the combined function module, **characterized in that**
- the first function module can be selected by means of the graphical user interface by dragging and dropping in order to use it for the configuration of the hardware component, wherein the first function module being displayed as a first two-dimensional area on the graphical user interface, at least after it has been dropped, and
- the second function module then being selectable by means of the graphical user interface by dragging and dropping, in order to use it for the configuration of the hardware component, wherein the second function module is represented as a second two-dimensional area on the graphical user interface at least during the dragging, and
- wherein the second two-dimensional area of the second function module can be brought into overlap with the first two-dimensional area of the first function module in order to link the two function modules to one another, so that the combined function module is formed.

11. Configuration program for configuring a hardware component with control logic, in particular a configurable safe input/output module having at least one module input for module input signals and/or at least one module output for module output signals for connecting at least one sensor or one actuator to the hardware component,
- wherein the configuration program can be executed on a data processing system and is set up to display a graphical user interface on a display device connected to the data processing system,
- the graphical user interface providing a plurality of function modules each having at least one input for input signals and one output for output signals, and it being possible to select the function modules in each case by means of the graphical user interface in order to use them for the configuration of the hardware component by including them in the control logic of the hardware component and/or activating them there for the configuration of the hardware component, and wherein the first and/or second function module being represented as an independent two-dimensional area on the graphical user interface before, during and/or after the selection, and the at least one input for input signals and the at least one output for output signals being represented as a graphical object in the two-dimensional area in such a way so that the hardware component can be configured by means of the graphical user interface such that the input signals and/or output signals are in an operative relationship with the module input signals of the module input and/or module output signals of the module output, and
- wherein the configuration program comprises instructions which cause the data processing system and/or the display device connected thereto to link a first and a second function module to one another so that a combined function module with at least one input for input signals and one output for output signals is formed, in such a way in that at least one of the inputs or outputs of the first function module and at least one of the inputs or outputs of the second function module form at least two of the inputs/outputs of the combined function module, **characterized in that**
- the first function module can be selected by means of the graphical user interface by dragging and dropping in order to use it for the configuration of the hardware component, wherein the first function module being displayed as a first two-dimensional area on the graphical user interface, at least after it has been dropped, and
- the second function module then being selectable by means of the graphical user interface by dragging and dropping, in order to use it for the configuration of the hardware component, wherein the second function module is represented as a second two-dimensional area on the graphical user interface at least during the dragging, and
- wherein the second two-dimensional area of the second function module can be brought into overlap with the first two-dimensional area of the first function module in order to link the two function modules to one another, so that the combined function module is formed.

12. Storage medium with a configuration program stored thereon for configuring a hardware component with control logic, in particular a configurable safe input/output module having at least one module input for module input signals and/or at least one module output for module output signals for connecting at least one sensor or one actuator to the hardware component, -
wherein the configuration program stored on the storage medium can be executed on a data processing system and is set up to display a graphical user interface on a display device connected to the data processing system,
- the graphical user interface providing a plurality of function modules each having at least one input for input signals and one output for output signals, and it being possible to select the function modules in each case by means of the graphical user interface in order to use them for the configuration of the hardware component by including them in the control logic of the hardware component and/or activating them there for the configuration of the hardware component, and wherein the first and/or second function module being represented as an independent two-dimensional area on the graphical user interface before, during and/or after the selection, and the at least one input for input signals and the at least one output for output signals being represented as a graphical object in the two-dimensional area in such a way so that the hardware component can be configured by means of the graphical user interface such that the input signals and/or output signals are in an operative relationship with the module input signals of the module input and/or module output signals of the module output, and
- wherein the configuration program stored on the storage medium comprises instructions which cause the data processing system and/or the display device connected thereto to link a first and a second function module to one another so that a combined function module with at least one input for input signals and one output for output signals is formed, such that at least one of the inputs or outputs of the first function module and at least one of the inputs or outputs of the second function module form at least two of the inputs/outputs of the combined function module, **characterized in that**
- the first function module can be selected by means of the graphical user interface by dragging and dropping in order to use it for the configuration of the hardware component, wherein the first function module being displayed as a first two-dimensional area on the graphical user interface, at least after it has been dropped, and
- the second function module then being selectable by means of the graphical user interface by dragging and dropping, in order to use it for the configuration of the hardware component, wherein the second function module is represented as a second two-dimensional area on the graphical user interface at least during the dragging, and
- wherein the second two-dimensional area of the second function module can be brought into overlap with the first two-dimensional area of the first function module in order to link the two function modules to one another, so that the combined function module is formed.

## Revendications

1. Procédé de configuration d'un composant matériel avec une logique de commande, en particulier d'un module d'entrée/de sortie sûr pouvant être configuré avec au moins une entrée de module pour des signaux d'entrée de module et/ou au moins une sortie de module pour des signaux de sortie de module pour le raccordement d'au moins un capteur ou d'un actionneur au composant matériel,
- dans lequel est utilisé pour la configuration du composant matériel un programme de configuration, lequel peut être exécuté sur une installation de traitement de données et est mis au point pour représenter une surface d'utilisateur graphique sur un système d'affichage relié à l'installation de traitement de données,
- dans lequel la surface d'utilisateur graphique fournit une multitude de modules fonctionnels avec respectivement au moins une entrée pour des signaux d'entrée et une sortie pour des signaux de sortie et dans lequel les modules fonctionnels peuvent être sélectionnés respectivement au moyen de la surface d'utilisateur graphique pour les prendre en compte par intégration dans la logique de commande du composant matériel ou par activation à cet endroit pour la configuration du composant matériel, et dans lequel le premier et/ou le deuxième module fonctionnel sont représentés sur la surface d'utilisateur graphique en tant qu'une zone plate autonome avant, pendant et/ou après la sélection et dans lequel l'au moins une entrée pour des signaux d'entrée et l'au moins une sortie pour des signaux de sortie sont représentées en tant qu'objet graphique dans la zone plate de sorte que le composant matériel peut être configuré au moyen de la surface d'utilisateur graphique de telle manière que les signaux d'entrée et/ou les signaux de sortie se trouvent dans une relation de coopération avec les signaux d'entrée de module de l'entrée de module et/ou les signaux de sortie de module de la sortie de module, et
- dans lequel un premier et un deuxième module fonctionnel sont combinés l'un à l' autre de telle sorte qu'un module fonctionnel combiné est formé avec au moins une entrée pour des signaux d'entrée et une sortie pour des signaux de sortie de telle manière qu'au moins une des entrées ou sorties du premier module fonctionnel et au moins une des entrées ou sorties du deuxième module fonctionnel forment au moins deux des entrées/sorties du module fonctionnel combiné, **caractérisé en ce que**
- le premier module fonctionnel est sélectionné par glisser-déposer au moyen de la surface d'utilisateur graphique pour prendre en compte celui-ci pour la configuration du composant matériel, dans lequel le premier module fonctionnel est représenté au moins après le déposer en tant qu'une première surface plate sur la surface d'utilisateur graphique et
- dans lequel ensuite le deuxième module fonctionnel est sélectionné par glisser-déposer au moyen de la surface d'utilisateur graphique, dans lequel le deuxième module fonctionnel est représenté sur la surface d'utilisateur graphique en tant qu'une deuxième zone plate au moins pendant le glisser, et
- dans lequel la deuxième surface plate du deuxième module fonctionnel est amenée en chevauchement avec la première zone plate du premier module fonctionnel pour combiner entre eux les deux modules fonctionnels de sorte que le module fonctionnel combiné est formé.

2. Procédé selon la revendication 1, dans lequel lors de la combinaison du premier et du deuxième module fonctionnel, le module fonctionnel combiné est formé de telle manière qu'au moins une des entrées du premier module fonctionnel et au moins une des entrées du deuxième module fonctionnel forment au moins deux entrées du module fonctionnel combiné.

3. Procédé selon la revendication 1 ou 2, dans lequel lors de la combinaison du premier et du deuxième module fonctionnel, le module fonctionnel combiné est formé de telle manière que les signaux de sortie d'au moins une des sorties du premier module fonctionnel et les signaux de sortie d'au moins une des sorties du deuxième module fonctionnel influencent les signaux de sortie d'au moins une sortie du module fonctionnel combiné.

4. Procédé selon la revendication 3, dans lequel une combinaison logique des signaux de sortie d'au moins une des sorties du premier module fonctionnel aux signaux de sortie d'au moins une des sorties du deuxième module fonctionnel forme les signaux de sortie d'au moins une sortie du module fonctionnel combiné, dans lequel la combinaison logique est de préférence un opérateur booléen, en particulier un opérateur AND, un opérateur OR, un opérateur XOR, un opérateur NOT, un opérateur NAND, un opérateur NOR ou un opérateur XNOR.

5. Procédé selon la revendication 4, dans lequel la combinaison logique est sélectionnée parmi un groupe de combinaisons logiques au moyen de la surface d'utilisateur graphique et/ou est modifiée, en particulier un opérateur booléen est sélectionné parmi le groupe comprenant un opérateur AND, un opérateur OR, un opérateur XOR, un opérateur NOT, un opérateur NAND, un opérateur NOR ou un opérateur XNOR.

6. Procédé selon l'une quelconque des revendications 1 à 5, dans lequel le premier et/ou le deuxième module fonctionnel sont sélectionnés au moyen de la surface d'utilisateur graphique pour prendre en compte ceux-ci pour la configuration du composant matériel avant que le premier et le deuxième composant fonctionnel ne soient combinés entre eux de sorte que le composant fonctionnel combiné est formé.

7. Procédé selon la revendication 6, dans lequel la sélection du premier et/ou du deuxième module fonctionnel est effectuée par glisser-déposer au moyen de la surface d'utilisateur graphique, en particulier au moyen d'un système de pointage ou d'un système de reconnaissance de gestes relié à l'installation de traitement de données et/ou au dispositif d'affichage.

8. Procédé selon l'une quelconque des revendications 1 à 7, dans lequel le module fonctionnel combiné est représenté sur la surface d'utilisateur graphique en tant qu'une zone plate autonome et de préférence l'au moins une entrée pour des signaux d'entrée, la sortie pour des signaux de sortie et/ou l'opérateur booléen sont représentés dans la zone plate en tant qu'objet graphique pour la combinaison logique de sorte que le composant matériel peut être configuré au moyen de la surface d'utilisateur graphique de telle manière que les signaux d'entrée et/ou signaux de sortie se trouvent dans une relation de coopération, comprenant l'opérateur booléen, avec les signaux d'entrée de module de l'entrée de module et/ou les signaux de sortie de module de la sortie de module.

9. Procédé selon l'une quelconque des revendications 1 à 8, dans lequel le premier, le deuxième module fonctionnel et/ou le module fonctionnel combiné représentent respectivement une fonction de telle manière que les signaux de sortie d'au moins une des sorties du module fonctionnel respectif correspondent à une fonction des signaux d'entrée d'au moins une des entrées du module fonctionnel respectif pour réaliser la fonction respective au moyen du composant matériel.

10. Dispositif de configuration d'un composant matériel avec une logique de commande, en particulier d'un module d'entrée/de sortie pouvant être configuré avec au moins une entrée de module pour des signaux d'entrée de module et/ou au moins une sortie de module pour des signaux de sortie de module pour le raccordement d'au moins un capteur ou d'un actionneur au composant matériel, comprenant
- une installation de traitement de données et un système d'affichage relié à celle-ci, lesquels sont mis au point pour exécuter un. programme de configuration pour la configuration du composant matériel et pour représenter une surface d'utilisateur graphique du programme de configuration,
- dans lequel la surface d'utilisateur graphique fournit une multitude de composants fonctionnels avec respectivement au moins une entrée pour des signaux d'entrée et une sortie pour des signaux de sortie et dans lequel les modules fonctionnels peuvent être sélectionnés respectivement au moyen de la surface d'utilisateur graphique pour les prendre en compte par intégration dans la logique de commande du composant matériel ou par activation à cet endroit pour la configuration du composant matériel, et dans lequel le premier et/ou le deuxième module fonctionnel sont représentés sur la surface d'utilisateur graphique en tant qu'une zone plate autonome avant, pendant et/ou après la sélection et dans lequel l'au moins une entrée pour des signaux d'entrée et l'au moins une sortie pour des signaux de sortie sont représentés dans la zone plate en tant qu'objet graphique de sorte que le composant matériel peut être configuré au moyen de la surface d'utilisateur graphique de telle manière que les signaux d'entrée et/ou les signaux de sortie se trouvent dans une relation de coopération avec les signaux d'entrée de module de l'entrée de module et/ou les signaux de sortie de module de la sortie de module, et
- dans lequel l'installation de traitement de données et/ou le système d'affichage relié à celle-ci sont mis au point pour combiner entre eux un premier et un deuxième module fonctionnel de sorte qu'un module fonctionnel combiné est formé avec au moins une entrée pour des signaux d'entrée et une sortie pour des signaux de sortie de telle manière qu'au moins une des entrées ou sorties du premier module fonctionnel et au moins une des entrées ou sorties du deuxième module fonctionnel forment au moins deux des entrées/sorties du module fonctionnel combiné, **caractérisé en ce que**
- le premier module fonctionnel peut être sélectionné par glisser-déposer au moyen de la surface d'utilisateur graphique pour prendre en compte celui-ci pour la configuration du composant matériel, dans lequel le premier module fonctionnel est représenté sur la surface d'utilisateur graphique en tant qu'une première zone plate au moins après le déposer et
- dans lequel ensuite le deuxième module fonctionnel peut être sélectionné par glisser-déposer au moyen de la surface d'utilisateur graphique pour prendre en compte celui-ci pour la configuration du composant matériel, dans lequel le deuxième module fonctionnel est représenté sur la surface d'utilisateur graphique en tant qu'une deuxième zone plate au moins pendant le glisser, et
- dans lequel la deuxième zone plate du deuxième module fonctionnel peut être amenée en chevauchement avec la première zone plate, du premier module fonctionnel pour combiner entre eux les deux modules fonctionnels de sorte que le module fonctionnel combiné est formé.

11. Programme de configuration pour la configuration du composant matériel avec une logique de commande, en particulier un module d'entrée/de sortie sûr pouvant être configuré avec au moins une entrée de module pour des signaux d'entrée de module et/ou au moins une sortie de module pour des signaux de sortie de module pour le raccordement d'au moins un capteur ou d'un actionneur au composant matériel,
- dans lequel le programme de configuration peut être exécuté sur une installation de traitement de données et est mis au point pour représenter une interface d'utilisateur graphique sur un système d'affichage relié à l'installation de traitement de données,
- dans lequel la surface d'utilisateur graphique fournit une multitude de modules fonctionnels avec respectivement au moins une entrée pour des signaux d'entrée et une sortie pour des signaux de sortie et dans lequel les modules fonctionnels peuvent être sélectionnés respectivement au moyen de la surface d'utilisateur graphique pour les prendre en compte par intégration dans la logique de commande du composant matériel ou par activation à cet endroit pour la configuration du composant matériel, et dans lequel le premier et/ou le deuxième module fonctionnel sont représentés sur la surface d'utilisateur graphique en tant qu'une zone plate autonome avant, pendant et/ou après la sélection, et dans lequel l'au moins une entrée pour des signaux d'entrée et l' au moins une sortie pour des signaux de sortie sont représentées dans la zone plate en tant qu'un objet graphique de sorte que le composant matériel peut être configuré au moyen de la surface d'utilisateur graphique de telle manière que les signaux d'entrée et/ou les signaux de sortie se trouvent dans une relation de coopération avec les signaux d'entrée de module de l'entrée de module et/ou avec les signaux de sortie de module de la sortie de module, et
- dans lequel le programme de configuration comprend des instructions, lesquelles amènent l'installation de traitement de données et/ou le système d'affichage relié à celle-ci à combiner entre eux un premier et un deuxième module fonctionnel de sorte qu'un module fonctionnel combiné est formé avec au moins une entrée pour des signaux d'entrée et une sortie pour des signaux de sortie de telle manière qu'au moins une des entrées ou sorties du premier module fonctionnel et au moins une des entrées ou sorties du deuxième module fonctionnel forment au moins deux des entrées/sorties du module fonctionnel combiné, **caractérisé en ce que**
- le premier module fonctionnel peut être sélectionné par glisser-déposer au moyen de la surface d'utilisateur graphique pour prendre en compte celui-ci pour la configuration du composant matériel, dans lequel le premier module fonctionnel est représenté sur la surface d'utilisateur graphique en. tant qu'une première zone plate au moins après le déposer, et
- dans lequel ensuite le deuxième module fonctionnel peut être sélectionné par glisser-déposer au moyen de la surface d'utilisateur graphique pour prendre en compte celui-ci pour la configuration du composant matériel, dans lequel le deuxième module fonctionnel est représenté sur la surface d'utilisateur graphique en tant qu'une deuxième zone plate au moins pendant le glisser, et
- dans lequel la deuxième zone plate du deuxième module fonctionnel peut être amenée en chevauchement avec la première zone plate du premier module fonctionnel pour combiner entre eux les deux modules fonctionnels de sorte que le module fonctionnel combiné est formé.

12. Support de stockage avec un programme de configuration stocké sur celui-ci pour configurer un composant matériel avec une logique de commande, en particulier d'un module d'entrée/de sortie sûr pouvant être configuré avec au moins une entrée de module pour des signaux d'entrée de module et/ou au moins une sortie de module pour des signaux de sortie de module pour le raccordement d'au moins un capteur ou un actionneur au composant matériel,
- dans lequel le programme de configuration stocké sur le support de stockage peut être exécuté sur une installation de traitement de données et est mis au point pour représenter une surface d'utilisateur graphique sur un système d'affichage relié à l'installation de traitement de données,
- dans lequel la surface d' utilisateur graphique fournit une multitude de composants fonctionnels avec respectivement au moins une entrée pour des signaux d'entrée et une sortie pour des signaux de sortie et dans lequel les composants fonctionnels peuvent être sélectionnés respectivement au moyen de la surface d'utilisateur graphique pour les prendre en compte par intégration dans la logique de commande du composant matériel ou par activation à cet endroit pour la configuration du composant matériel, et dans lequel le premier et/ou le deuxième module fonctionnel sont représentés sur la surface d'utilisateur graphique en tant qu'une zone plate autonome avant, pendant et/ou après la sélection, et dans lequel l'au moins une entrée pour des signaux d'entrée et l'au moins une sortie pour des signaux de sortie sont représentées dans la zone plate en tant qu'objet graphique de sorte que le composant matériel peut être configuré au moyen de la surface d'utilisateur graphique de telle manière que les signaux d'entrée et/ou les signaux de sortie se trouvent dans une relation de coopération avec les signaux d'entrée de module de l'entrée de module et/ou avec les signaux de sortie de moule de la sortie de module, et
- dans lequel le programme de configuration stocké sur le support de stockage comprend des instructions, lesquelles amènent l'installation de traitement de données et/ou le système d'affichage relié à celle-ci à combiner entre eux un premier et un deuxième module fonctionnel de sorte qu'un module fonctionnel combiné est formé avec au moins une entrée pour des signaux d'entrée et une sortie pour des signaux de sortie de telle manière qu'au moins une des entrées ou sorties du premier module fonctionnel et au moins une des entrées ou sorties du deuxième module fonctionnel forment au moins deux des entrées/sorties du module fonctionnel combiné, **caractérisé en ce que**
- le premier module fonctionnel peut être sélectionné par glisser-déposer au moyen de la surface d'utilisateur graphique pour prendre en compte celui-ci pour la configuration du composant matériel, dans lequel le premier module fonctionnel est représenté sur la surface d'utilisateur graphique en tant qu'une première zone plate au moins après le déposer et
- dans lequel ensuite le deuxième module fonctionnel peut être sélectionné par glisser-déposer au moyen de la surface d'utilisateur graphique pour prendre en compte celui-ci pour la configuration du composant matériel, dans lequel le deuxième composant fonctionnel est représenté sur la surface d'utilisateur graphique en tant qu'une deuxième zone plate au moins pendant le glisser, et
- dans lequel la deuxième zone plate du deuxième module fonctionnel peut être amenée en chevauchement avec la première zone plate du premier module fonctionnel pour combiner entre eux les deux modules fonctionnels de sorte que le module fonctionnel combiné est formé.
